# EUROPEAN PATENT APPLICATION

(11) **EP 4 461 576 A2**
(43) Date of publication of application: **13.11.2024**
(21) Application number: 23217127.2
(22) Date of filing: 15.12.2023
(51) Int. Cl.: B60K 11/02, H02K 9/19

(54) **VEHICLE COOLING SYSTEM AND VEHICLE**

(30) Priority: 19.12.2022 CN 202211630967
(71) Applicant: Valeo eAutomotive Germany GmbH, 91056 Erlangen (DE)
(72) Inventor: JIN, Yejin, Shanghai, S51SHG1 (CN); MULLER, Michel, 95800 Cergy (FR)
(74) Representative: Valeo Powertrain Systems

(57) **Abstract**

The present disclosure relates to a vehicle cooling system (100), comprising a water cooling circuit (10), an oil cooling circuit (20), an electric energy storage unit (1), and an electric driving unit (2), wherein the water cooling circuit (10) comprises a first cooling pipeline (11) for cooling the electric energy storage unit (1), and the electric driving unit comprises an electric motor (3), a gearbox (4), and a power electronic device (5). The water cooling circuit (10) comprises a second cooling pipeline (12) for cooling the power electronic device (5), wherein the first cooling pipeline (11) and the second cooling pipeline (12) are connected in series in the water cooling circuit (10), and the second cooling pipeline (12) is arranged downstream of the first cooling pipeline (11) along the direction of cooling water flow. The housings for the electric motor (3) and the gearbox (4) are integrated, and the oil cooling circuit (20) is arranged inside the housings for the electric motor (3) and the gearbox (4), wherein a cooling airflow (F) flows through the surfaces of the housings for the electric motor (3) and the gearbox (4). The present disclosure further relates to a vehicle comprising such a vehicle cooling system.

## Description

### TECHNICAL FIELD

The present disclosure relates to a vehicle cooling system. The present disclosure further relates to a vehicle comprising such a vehicle cooling system.

### BACKGROUND

The electric driving unit of a vehicle is used to convert electric energy into mechanical energy for the vehicle to travel, and may comprise an electric motor, a gearbox, and a power electronic device. Due to objective physical laws and the limitations of actual manufacturing processes, energy transfer by various components in an electric driving unit cannot reach 100% and is always accompanied by heat generation. A vehicle cooling system is used to cool an electric driving unit, thereby avoiding performance degradation or system failure caused by accumulation of heat. In a vehicle cooling system, an electric driving unit may be arranged in a cooling circuit, where a cooling medium circulates to disperse the heat generated by the electric driving unit.

The components in an electric driving unit have different energy transfer efficiencies, so they have different heating capacities. The maximum temperatures that each component can withstand (hereinafter referred to as withstand temperature) also vary. Usually, electric motors and gearboxes have low efficiencies, high heating capacities, and high withstand temperatures, while power electronic devices have high efficiencies, low heating capacities, but low withstand temperatures.

CN111959260A discloses a propulsion module for hybrid electric vehicles or electric vehicles, and a system in which an electric motor and a power electronic device (for example, an inverter) are cooled only by water and a radiator, but this system requires an additional water channel (comprising a radiator and a water pump). CN113329907A discloses another driving system for hybrid electric vehicles or electric vehicles, wherein all the components, including, but not limited to, electric motors, gearboxes, and inverters, in the driving system are cooled by oil, without the need for an additional water channel, while heat is released through heat exchange between a heat dissipating fin located outside the housing of the driving system and an external airflow. However, the cooling capacity of using oil as a cooling medium is limited, wherein, specifically when the oil temperature is low, the heat dissipation is also low, so the continuous power of the electric driving system is also low; when the oil temperature is high, the cooling of the electronic components in the inverter is insufficient, which limits the continuous power.

It is thus clear that if, in a vehicle cooling system, various components in the electric driving unit are arranged in the same cooling circuit (as disclosed in CN113329907A, for example) and the same cooling medium is used, the cooling capacity is limited by excessive limitations in the design stage, so the system is applicable only to a small vehicle whose electric driving unit has a relatively low heating capacity. In tropical countries with high ambient temperatures, the cooling capacity of a vehicle cooling system in which a cooling medium is shared is limited more seriously, which makes the system inapplicable even to small vehicles. In another aspect, if a vehicle cooling system comprises one or more cooling circuits used only for some components in an electric driving unit (as disclosed in CN111959260A, for example), although such a cooling circuit may be specially designed to achieve a high cooling capacity, additional heat exchangers and flow control components, such as valves or pumps, need to be provided, which will lead to an increase in component costs.

### SUMMARY OF THE INVENTION

An objective of the present disclosure is to propose a vehicle cooling system for solving the above-mentioned technical problems, which can cool various components in an electric driving unit, while having optimised cooling capacity and lower component costs.

According to an embodiment of the present disclosure, the vehicle cooling system comprises: a water cooling circuit; an oil cooling circuit; and an electric energy storage unit, wherein the water cooling circuit comprises a first cooling pipeline for cooling the electric energy storage unit; an electric driving unit comprising an electric motor, a gearbox, and a power electronic device. The water cooling circuit comprises a second cooling pipeline for cooling the power electronic device, wherein the first cooling pipeline and the second cooling pipeline are connected in series in the water cooling circuit, and the second cooling pipeline is arranged downstream of the first cooling pipeline along the direction of cooling water flow. The housings for the electric motor and the gearbox are integrated, the oil cooling circuit is arranged inside the housings for the electric motor and the gearbox, and a cooling airflow flows through the surfaces of the housings for the electric motor and the gearbox.

In the present disclosure, the vehicle cooling system comprises two cooling circuits: a water cooling circuit and an oil cooling circuit. The electric motor and the gearbox of the electric driving unit are cooled by the oil cooling circuit, while the power electronic device is cooled by the water cooling circuit. The heating capacities and the withstand temperatures of the electric motor and the gearbox are higher than the withstand temperature of the power electronic device. By separating the power electronic device from the oil cooling circuit, the cooling oil circulating in the oil cooling circuit of the vehicle cooling system may be heated up to the withstand temperature of the electric motor and the gearbox, accelerating the heat dissipation thereby to the external environment. The oil cooling circuit thus has a high cooling capacity, which can cool high-power electric motors and gearboxes. The cooling airflow flowing through the surfaces of the housings for the electric motor and the gearbox further increases the heat dissipation of the electric motor and the gearbox. The electric driving unit as a whole can have a high output power, which is applicable to medium-sized and large vehicles and adaptable to hot environments.

The heating capacity and withstand temperature of the power electronic device are relatively low, and these characteristics are similar to those of electric energy storage units. A first cooling pipeline and a second cooling pipeline for electric energy storage units and cooling power electronic devices are arranged in series in the water cooling circuit. In other words, the power electronic device is integrated into the cooling circuits of the electric energy storage unit without the need for arranging a separate cooling circuit for it, which reduces component costs. In addition, when the ambient temperature is low, the heat generated by the power electronic device may heat the electric energy storage unit by the water cooling circuit, thereby reducing the power consumption for heating the electric energy storage unit.

A vehicle cooling system according to the present disclosure may further have one or more of the following features individually or in combination.

According to an embodiment of the present disclosure, the housings for the electric motor and the gearbox are provided with heat dissipating protrusions. The heat dissipating protrusion can increase the contact area between the housing and a cooling airflow, thereby enhancing the heat dissipation capacity of the housing.

According to an embodiment of the present disclosure, the heat dissipating protrusion is a heat dissipating fin.

According to an embodiment of the present disclosure, the water cooling circuit further comprises a water-cooled pump and a radiator, wherein the water-cooled pump is configured to circulate cooling water in the first cooling pipeline, the second cooling pipeline, and the radiator, the radiator is passed through by the cooling airflow, and the radiator is arranged upstream of the cooling airflow relative to the surfaces of the housings for the electric motor and the gearbox.

In this embodiment, the water cooling circuit has an independent radiator. In combination with the cooling airflow flowing through the radiator, the water cooling circuit can dissipate the heat generated by the power electronic device and the electric energy storage unit to the external environment.

According to an embodiment of the present disclosure, the water cooling circuit further comprises a water-cooled pump and a heat exchanger, wherein the heat exchanger is configured to exchange heat with an air-conditioning system of the vehicle, the air conditioning system comprises a condenser, the condenser is passed through by the cooling airflow, and the condenser is arranged upstream of the cooling airflow relative to the surfaces of the housings for the electric motor and the gearbox.

In this embodiment, the water cooling circuit does not have an independent radiator, but rather dissipates the heat generated by the power electronic device and the electric energy storage unit to the external environment through the air-conditioning system of the vehicle.

According to an embodiment of the present disclosure, at least a part of the cooling airflow is introduced from an air inlet on the front end and/or on a side of the vehicle when it travels. In other words, a part of the cooling airflow may be passively generated by the travelling of the vehicle.

According to an embodiment of the present disclosure, at least a part of the cooling airflow is generated by a fan. In other words, a part of the cooling airflow may be actively generated. Especially, when the vehicle is travelling at a low speed, the cooling airflow generated by the travelling of the vehicle is insufficient, and a fan may supplement the cooling airflow, so that the cooling capacity of the vehicle cooling system will not decrease excessively.

According to an embodiment of the present disclosure, the power electronic device comprises at least one of an inverter, an on-board charger, and a direct current-to-direct current converter.

According to an embodiment of the present disclosure, the oil cooling circuit further comprises a driving unit for driving oil to circulate in the oil cooling circuit.

According to an embodiment of the present disclosure, the driving unit is an oil-cooled pump integrated into the electric driving unit.

According to an embodiment of the present disclosure, the oil guiding mechanism comprises an oil guiding pipeline arranged in the electric driving unit for receiving and conveying the cooling oil thrown out by the rotation of gears in the gearbox.

According to an embodiment of the present disclosure, the housing of the power electronic device is integrated with the housings for the electric motor and the gearbox.

The technical solution for cooling a power electronic device through a water cooling circuit has been described above. To further reduce costs, a power electronic device may also be cooled solely by air cooling. This is particularly applicable to an embodiment in which a power electronic device is arranged separately from an electric motor and a gearbox.

In such an embodiment, the vehicle cooling system comprises: an oil cooling circuit; an electric driving unit comprising an electric motor, a gearbox, and a power electronic device; the housings for the electric motor and the gearbox are integrated, the oil cooling circuit is arranged inside the housings for the electric motor and the gearbox, and a cooling airflow flows through the surfaces of the housings for the electric motor and the gearbox. The power electronic device is arranged separately from the housings for the electric motor and the gearbox, and an additional cooling airflow flows through the surface of the housing of the power electronic device.

According to the above features, the vehicle cooling system further eliminates the need for any cooling pipelines for the power electronic device or corresponding flow control components, thereby allowing a further reduction in component costs.

According to an embodiment of the present disclosure, at least a part of the cooling airflow is introduced from an air inlet on the front end and/or on a side of the vehicle when it travels, and/or at least a part of the additional cooling airflow is introduced from an air inlet on the front end and/or on a side of the vehicle when it travels.

According to an embodiment of the present disclosure, at least a part of the additional cooling airflow is generated by an additional fan.

The present disclosure further relates to a vehicle comprising a vehicle cooling system as described above.

### BRIEF DESCRIPTION OF THE DRAWINGS

To explain the technical solution of embodiments of the present disclosure more clearly, the drawings which need to be used in describing the embodiments are described in simple terms below. Obviously, the drawings in the description below are merely some embodiments of the present disclosure, and those skilled in the art could obtain other drawings based on these drawings without expending inventive effort. The drawings below have not been drawn by meticulously reducing or enlarging actual dimensions in equal proportion, but focus on showing the substance of the present disclosure.
Fig. 1 is a block diagram of a vehicle cooling system according to an embodiment of the present disclosure;
Fig. 2 is a variant of the vehicle cooling system shown in Fig. 1, where the oil-cooled pump in the oil cooling circuit is omitted;
Fig. 3 is a block diagram of a vehicle cooling system according to another embodiment of the present disclosure;
Fig. 4 is a variant of the vehicle cooling system shown in Fig. 3, where the oil-cooled pump in the oil cooling circuit is omitted;
Fig. 5 is a block diagram of a vehicle cooling system according to yet another embodiment of the present disclosure.

In all the drawings, identical or similar components are denoted by identical reference signs.

### DETAILED DESCRIPTION

To make the objectives, technical solutions and advantages of embodiments of the present disclosure clearer, the technical solutions in the embodiments of the present disclosure will be clearly and completely described below in conjunction with the drawings of the embodiments of the present disclosure.

Unless otherwise defined, technical terms or scientific terms used herein shall have the common meanings as understood by those skilled in the art. "A", "one", "said" and similar terms used in the description and claims of the present disclosure of the patent application, rather than meaning a quantity limit, mean that there is at least one. "Comprise", "include", or any other similar term means that the element or object appearing before the term covers the elements or objects and equivalents thereof listed after the term but does not exclude other elements or objects. Words such as "connected" or "linked" are not restricted to a physical or mechanical connection, and may include an electrical connection, whether direct or indirect. "Efficiency" refers to the ratio of the output power of an electric driving unit and components thereof to the input power thereof, that is, efficiency = output power/input power.

In order to facilitate description, the drawings of the present disclosure accordingly simplify or omit components commonly used in the art, such as external connection lines and other components that are irrelevant to the description of the present disclosure. These omitted or simplified components do not affect the understanding of the present disclosure by a person skilled in the art.

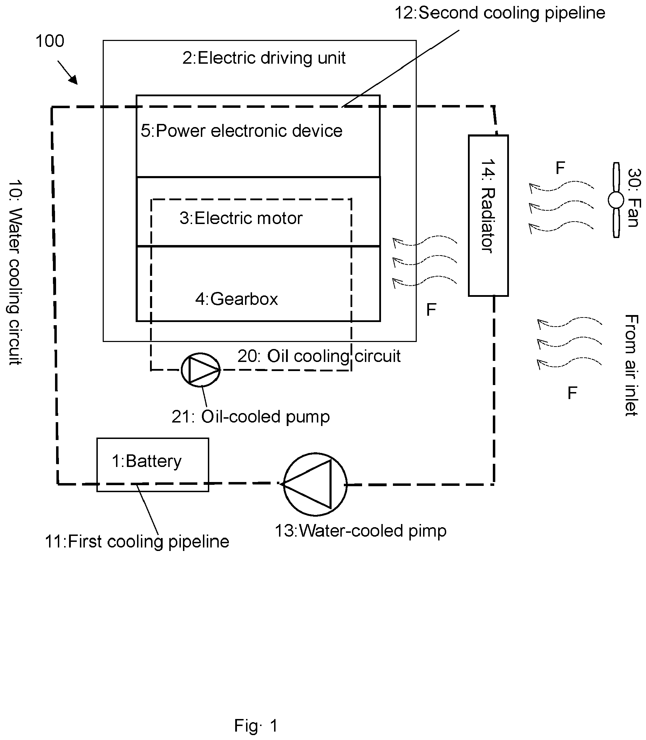

Fig. 1 is a block diagram of a vehicle cooling system 100 according to an embodiment of the present disclosure. The vehicle cooling system 100 is specifically configured to cool the electric driving unit 2.

The electric driving unit 2 comprises an electric motor 3, a gearbox 4, and a power electronic device 5. The electric motor 3 converts input electric energy into rotary mechanical energy, and the gearbox 4 is mechanically connected to the electric motor 3 to adjust the torque generated by and speed of the electric motor 3 and then transmit them to the wheels of the vehicle. The power electronic device 5 may comprise at least one of an inverter, an on-board charger, and a direct current-to-direct current converter. An inverter can invert a direct current output from an electric energy storage unit (for example, a battery or any other electric energy storage unit) into an alternating current capable of driving an electric motor, an on-board charger can charge an electric energy storage unit during energy recovery in a vehicle, and a direct current-to-direct current converter can convert a high-voltage direct current output from an electric energy storage unit into a low-voltage direct current suitable for use in the low-voltage system of a vehicle.

The electric motor 3 may be a synchronous electric motor or an asynchronous electric motor. When the electric motor 3 is a synchronous electric motor, it may comprise a winding rotor or a permanent magnet rotor. In the embodiment shown, the electric motor 3 is a synchronous electric motor with a permanent magnet, and the electric motor 3 may supply rated power in the range of 10 kW to 50 kW, or even higher. For example, for nominal mains voltages ranging from 48 V to 350 V, or for higher mains voltages up to 800 V, the rated power provided by an electric motor can range from 10 kW to 300 kW. The electric motor 3 may comprise a stator with three-phase windings, or a combination of two three-phase windings or five-phase windings.

Due to the mechanical connection between the electric motor 3 and the gearbox 4, they are arranged adjacent to each other. For the sake of compactness and transmission efficiency, the housings for the electric motor 3 and the gearbox 4 may be integrated, which means that these two housings may be formed integrally or assembled from a plurality of housing components. Specifically, the two can be accommodated in a chamber defined by the same housing, or the housing that accommodates the electric motor 3 and the housing that accommodates the gearbox 4 may be fixedly connected by screws, for example, and a sealing wall may be provided between these two housings. The power electronic device 5 is electrically connected to the electric motor 3 and the electric energy storage unit 1. When the integration level of the electric driving unit 2 needs to be improved, the power electronic device 5 may also be arranged adjacent to the electric motor 3 and the gearbox 4, the housing of the power electronic device 5 may optionally be integrated with the housings for the electric motor 3 and the gearbox 4, and a sealing structure may be provided between the housings.

Among the components of the electric driving unit 2, the electric motor 3 and the gearbox 4 have relatively low efficiencies, while the power electronic device 5 has a relatively high efficiency. Therefore, the heat generated by the electric driving unit 2 is generated mainly by the electric motor 3 and the gearbox 4. In addition, the power electronic device 5 comprises a large number of electronic parts, which have low withstand temperatures, while the electric motor 3 and the gearbox 4 have relatively high withstand temperatures.

The vehicle cooling system 100 comprises two cooling circuits: a water cooling circuit 10 and an oil cooling circuit 20.

As shown in Fig. 1, the water cooling circuit 10 comprises a first cooling pipeline 11, a second cooling pipeline 12, a water-cooled pump 13, and a radiator 14. The first cooling pipeline 11 is configured to cool the electric energy storage unit 1, and the second cooling pipeline 12 is configured to cool the power electronic device 5. The water-cooled pump 12 circulates cooling water through the first cooling pipeline 11, the second cooling pipeline 12, and the radiator 14. The radiator 14 is passed through by a cooling airflow F, which dissipates the heat of the cooling water flowing therein to the external environment, thereby cooling the cooling water. The second cooling pipeline 12 is arranged downstream of the first cooling pipeline 11 along the direction of cooling water flow. In other words, cooled cooling water first flows through the first cooling pipeline 11 to cool the electric energy storage unit 1, and then flows through the second cooling pipeline 12 to cool the power electronic device 5.

The oil cooling circuit 20 is arranged inside the housings for the electric motor 3 and the gearbox 4. The oil cooling circuit 20 may further comprise an oil guiding mechanism (not shown in the drawing) to guide oil to circulate in the oil cooling circuit 20. The oil guiding mechanism may comprise an oil-cooled pump 21, which is preferably integrated into the electric driving unit 2. For example, the oil-cooled pump 21 may be mounted at the housing of the gearbox 4, which forms a cooling cycle by sucking oil from, for example, the gearbox 4 and/or the electric motor 3, delivering the oil to the components that need to be cooled in the electric driving unit 2, and ultimately returning the oil to the housings for the gearbox 4 and/or the electric motor 3 by gravity.

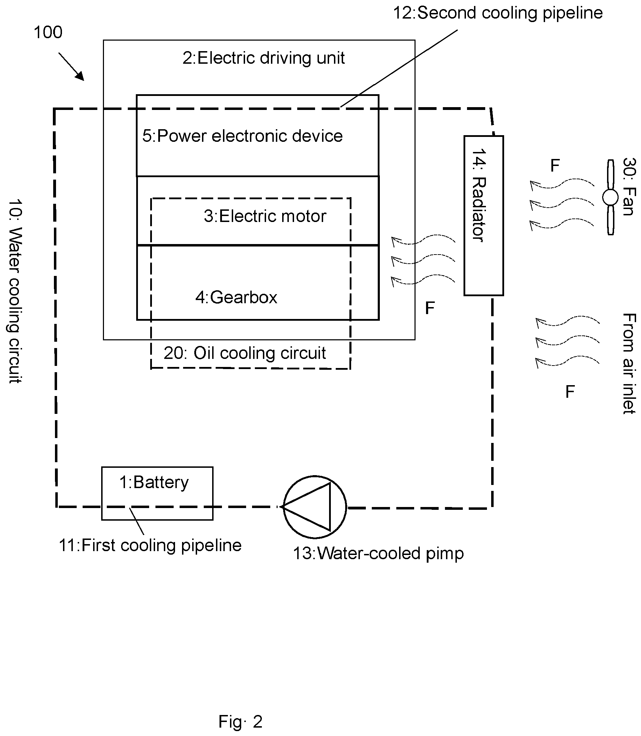

In another embodiment, the oil guiding mechanism may comprise an oil guiding pipeline arranged in the electric driving unit 2 for receiving and conveying the cooling oil thrown out by the rotation of gears in the gearbox 4. Specifically, the rotation of gears makes it possible to churn the cooling oil stored at the bottom of the housing of the gearbox 4, and, through the oil guiding pipelines inside the housings for the gearbox 4 and the electric motor 3, receive the cooling oil thrown out and convey it to the components that need to be cooled in the electric driving unit 2 (including, but not limited to, the rotor and stator of the electric motor 3, or other components inside the gearbox 4), before finally returning the oil to the interior of the housing of the gearbox 4 by gravity to form a cooling cycle, that is, the oil cooling circuit 20. An oil cooling circuit formed by gear churning eliminates the need for any additional oil-cooled pumps, which further simplifies the structure and reduces costs. A block diagram of the vehicle cooling system 100 with such an oil cooling circuit is shown in Fig. 2.

Through the oil cooling circuit 20, the heat generated by the electric motor 3 and gearbox 4 is carried to the housings for the electric motor 3 and the gearbox 4, and the cooling airflow F flows through the surfaces of the housings, thereby dissipating the heat to the external environment. The housings for the electric motor 3 and the gearbox 4 are equipped with heat dissipating protrusions, such as heat dissipating fins, to increase the contact area between the cooling airflow F and the housings, thereby improving the heat dissipation capacity.

The cooling airflow F comprises a part actively generated by the fan 30 and a passively generated part that is introduced from an air inlet on the front end and/or on a side of the vehicle when it travels. The radiator 14 of the water cooling circuit 10 is usually arranged upstream of the cooling airflow F, which means that the cooling airflow F first flows through the radiator 14, then is guided towards the electric driving unit 2, and flows through the surfaces of the housings for the electric motor 3 and the gearbox 4.

In the above embodiment of the vehicle cooling system 100, the power electronic device 5 is separated from the oil cooling circuit 20. Therefore, the temperature of the oil circulating in the oil cooling circuit 20 may exceed the withstand temperature of the power electronic device 5. Compared with the case where the oil cooling circuit 20 also passes through the power electronic device 5, the temperature of the oil circulating in the oil cooling circuit 20 may increase from about 70°C to 110°C, which greatly improves the heat dissipation capacity of the oil cooling circuit 20. The power of the electric driving unit 2 may be increased so that it is applicable to medium-sized and large vehicles and in hot climates.

The power electronic device 5 separated from the oil cooling circuit 20 is combined with the water cooling circuit 10 for cooling the electric energy storage unit 1. The withstand temperature of the electric energy storage unit 1 is lower than that of the power electronic device 5, so the water cooling circuit 10 may be used to cool the power electronic device 5. The power electronic device 5 has a high efficiency while generating little heat, so it has no significant impact on the design of the water cooling circuit 10. In addition, when the temperature is low in winter, the heat generated by the power electronic device 5 may also be used to heat the electric energy storage unit 1. In addition, the power electronic device 5 has a very low specific heat capacity and heats up quickly, so it can heat the electric energy storage unit 1 at a high response speed. The present disclosure is designed to eliminate the need to arrange a separate cooling circuit, especially a water cooling circuit, for cooling the power electronic device 5, which lowers component costs and reduces the workload and difficulty of vehicle assembly.

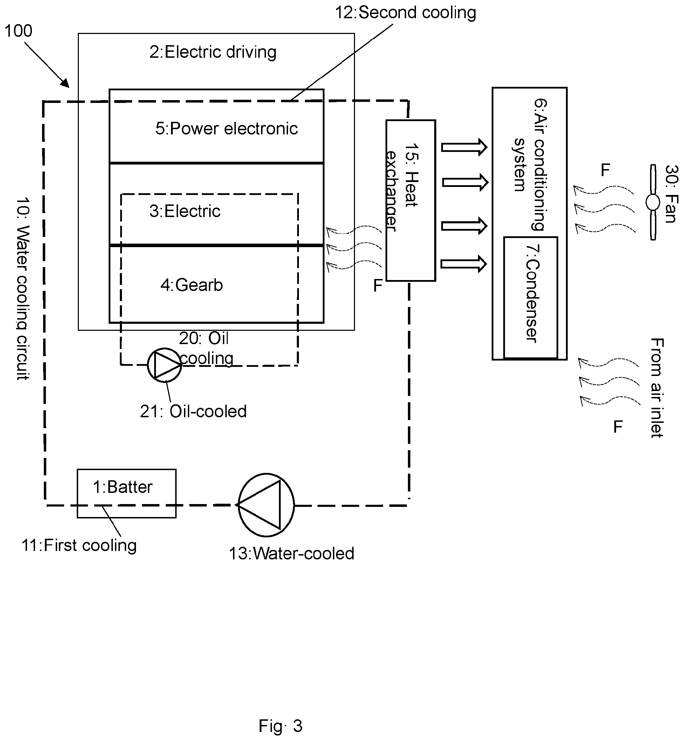

Fig. 3 is a block diagram of a vehicle cooling system 100 according to another embodiment of the present disclosure. The vehicle cooling system 100 shown in Fig. 3 is similar to the vehicle cooling system 100 shown in Fig. 1, so the identical parts of the two systems will not be described again, wherein the main difference between them lies in the way the water cooling circuit 10 dissipates heat to the external environment. In the embodiment shown in Fig. 1, the water cooling circuit 10 has a radiator 14, and dissipates heat to the external environment through the radiator 14. In the embodiment shown in Fig. 3, the water cooling circuit 10 no longer has a radiator, but rather comprises a heat exchanger 15. The heat exchanger 15 exchanges heat with the air-conditioning system 6 of the vehicle, thereby transferring heat to the air-conditioning system 6. The air-conditioning system 6 comprises a condenser 7 passed through by the cooling airflow F, wherein the heat transferred to the air-conditioning system 6 is ultimately dissipated at the condenser 7 into the environment outside of the vehicle. Similarly, the cooling airflow F comprises a part actively generated by the fan 30 and a passively generated part that is introduced from an air inlet on the front end and/or on a side of the vehicle when it travels. In another aspect, the condenser 7 is arranged upstream of the cooling airflow F relative to the surfaces of the housings for the electric motor 3 and the gearbox 4, wherein the cooling airflow F sequentially flows through the condenser 7 and heat exchanger 15, then towards the electric driving unit 2, and through the surfaces of the housings for the electric motor 3 and the gearbox 4, ultimately dissipating heat to the external environment.

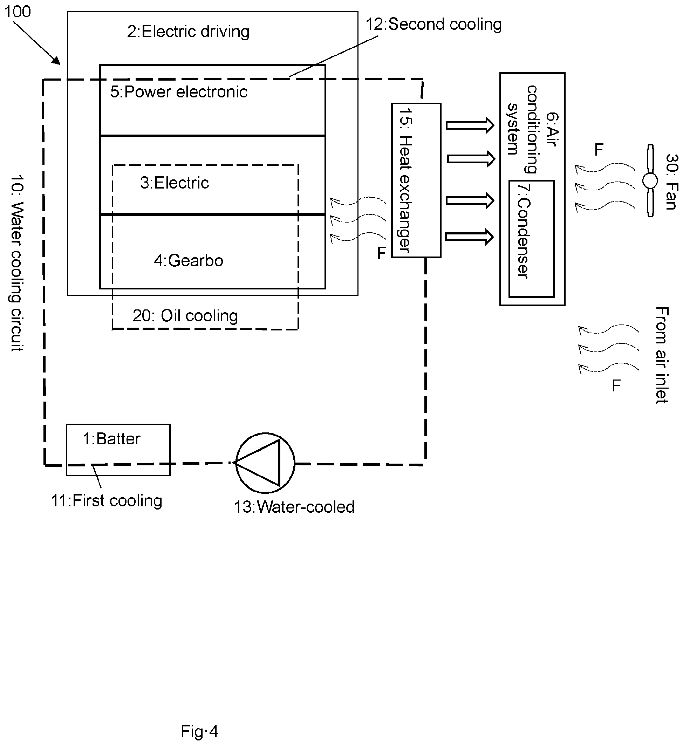

Fig. 4 is a variant of the vehicle cooling system 100 shown in Fig. 3. In this variant, similar to the embodiment shown in Fig. 2, the oil cooling circuit 20 is formed by gear churning, thus eliminating the need for any additional oil-cooled pumps.

The embodiments shown in Fig. 1 to Fig. 4 correspond to the case where the electric energy storage unit is cooled by liquid cooling (for example, the water cooling circuit 10 shown in Fig. 1 to Fig. 4). For the case where the electric energy storage unit is cooled not by liquid cooling, if a separate water cooling circuit is provided for the power electronic device 5 separated from the oil cooling circuit 20, high component costs will be incurred and the workload and difficulty of vehicle assembly will increase. Therefore, in this case, the power electronic device 5 is cooled preferably by air cooling.

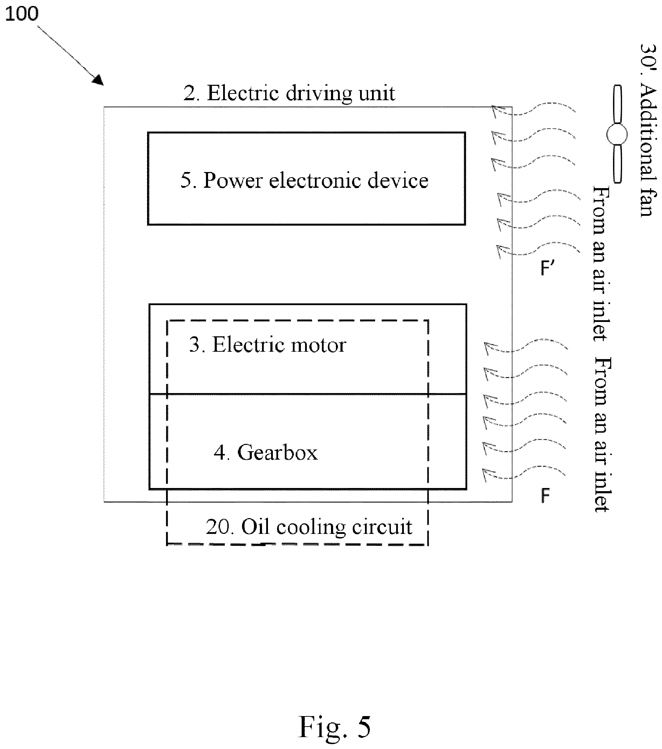

Fig. 5 is a block diagram of a vehicle cooling system 100 in the case where the electric energy storage unit is cooled not by liquid cooling. In the embodiment shown in Fig. 5, the vehicle cooling system 100 cools the power electronic device 5 by air cooling. In the electric driving unit 2, the power electronic device 5 is arranged separately from the housings for the electric motor 3 and the gearbox 4, and an additional cooling airflow F' flows through the surface of the housing of the power electronic device 5 to dissipate the heat generated thereby to the external environment. The housings for the electric motor 3 and the gearbox 4 are still integrated and are cooled by an oil cooling circuit 20 arranged inside the housings. The cooling airflow F flows through the surfaces of the housings for the electric motor 3 and the gearbox 4. At least a part of the cooling airflow F and/or of the additional cooling airflow F' is introduced from an air inlet on the front and/or on a side of the vehicle when it travels. The housing of the power electronic device 5 is provided with heat dissipating protrusions, for example, heat dissipating fins. The heat dissipating protrusion can increase the contact area between the housing and a cooling airflow, thereby enhancing the heat dissipation capacity of the housing. Similarly, the housings for the electric motor 3 and the gearbox 4 may also be equipped with heat dissipating protrusions, namely heat dissipating fins. The vehicle cooling system 100 may further comprise an additional fan 30'. The additional fan 30' performs a function similar to that of the fan 30, configured to generate a part of the additional cooling airflow F' in case the additional cooling airflow F' generated when the vehicle travels is insufficient, thereby compensating for the heat dissipation capacity of the vehicle cooling system 100. The additional fan may be fixed on the housing of the power electronic device 5 to provide continuous cooling airflows for the power electronic device 5, thus improving the heat dissipation capacity.

Similarly, the oil cooling circuit 20 further comprises an oil guiding mechanism for guiding oil to circulate in the oil cooling circuit 20. The oil guiding mechanism may comprise an oil-cooled pump (not shown in the drawing) integrated into the electric driving unit 2. In another embodiment, the oil guiding mechanism may comprise an oil guiding pipeline arranged in the electric driving unit 2 to receive cooling oil thrown out by the rotation of gears in the gearbox and deliver the oil to the components that need to be cooled in the electric driving unit 2, including, but not limited to, the rotor and stator of the electric motor 3, or other components in the gearbox 4, wherein an oil cooling circuit formed by gear churning eliminates the need for an additional oil-cooled pump, further simplifies the structure and reducing costs.

According to another aspect of the present disclosure, a vehicle is proposed, comprising a vehicle cooling system 100 as described above. The vehicle may be an electrified vehicle, such as a battery electric vehicle (BEV), a hybrid electric vehicle (HEV), a plug-in hybrid electric vehicle (PHEV), a range extended EV and a fuel cell electric vehicle (FCEV). The vehicle may also be a hydrogen-powered vehicle. It is understandable that the above-described vehicle cooling system 100 is not intended to cover all cooling apparatuses included in a vehicle. A vehicle may comprise a cooling apparatus that does not belong to the above-described vehicle cooling system 100.

Certain features, structures or characteristics in one or more embodiments of the present disclosure may be combined appropriately.

The above is a description of the present disclosure and should not be considered as a limitation thereto. Although several exemplary embodiments of the present disclosure have been described, a person skilled in the art shall easily understand that many modifications can be made to the exemplary embodiments without departing from the novel teaching and advantages of the present disclosure. Therefore, all such modifications are intended to be included in the scope of the present disclosure as defined by the claims. It should be understood that the above is a description of the present disclosure, that the present disclosure should not be regarded as being limited to the specific embodiments disclosed, and that modifications to the disclosed embodiments and other embodiments are intended to be included in the scope of the present disclosure.

## Claims

1. A vehicle cooling system (100), **characterised in that** the vehicle cooling system (100) comprises:
a water cooling circuit (10);
an oil cooling circuit (20);
an electric energy storage unit (1), wherein the water cooling circuit (10) comprises a first cooling pipeline (11) for cooling the electric energy storage unit (1);
an electric driving unit (2), comprising an electric motor (3), a gearbox (4), and a power electronic device (5),
wherein the water cooling circuit (10) comprises a second cooling pipeline (12) for cooling the power electronic device (5),
wherein the first cooling pipeline (11) and the second cooling pipeline (12) are connected in series in the water cooling circuit (10), and the second cooling pipeline (12) is arranged downstream of the first cooling pipeline (11) along a direction of a cooling water flow;
wherein housings for the electric motor (3) and the gearbox (4) are integrated, and the oil cooling circuit (20) is arranged inside the housings for the electric motor (3) and the gearbox (4), and
wherein a cooling airflow (F) flows through surfaces of the housings for the electric motor (3) and the gearbox (4).

2. The vehicle cooling system (100) according to claim 1, **characterised in that**
the housings for the electric motor (3) and the gearbox (4) are provided with heat dissipating protrusions.

3. The vehicle cooling system (100) according to claim 2, **characterised in that**
the heat dissipating protrusion is a heat dissipating fin.

4. The vehicle cooling system (100) according to claim 1, **characterised in that**
the water cooling circuit (10) further comprises a water-cooled pump (13) and a radiator (14), wherein the water-cooled pump (13) is configured to circulate cooling water in the first cooling pipeline (11), the second cooling pipeline (12), and the radiator (14), the radiator (14) is passed through by the cooling airflow (F), and the radiator (14) is arranged upstream of the cooling airflow (F) relative to the surfaces of the housings for the electric motor (3) and the gearbox (4).

5. The vehicle cooling system (100) according to claim 1, **characterised in that**
the water cooling circuit (10) further comprises a water-cooled pump (13) and a heat exchanger (15), wherein the heat exchanger (15) is configured to exchange heat with an air-conditioning system (6) of a vehicle, the air conditioning system (6) comprises a condenser (7), the condenser (7) is passed through by the cooling airflow (F), and the condenser (7) is arranged upstream of the cooling airflow (F) relative to the surfaces of the housings for the electric motor (3) and the gearbox (4).

6. The vehicle cooling system (100) according to any one of claims 1 to 5, **characterised in that**
at least a part of the cooling airflow (F) is introduced from an air inlet on a front end and/or on a side of the vehicle when it travels.

7. The vehicle cooling system (100) according to any one of claims 1 to 5, **characterised in that**
at least a part of the cooling airflow (F) is generated by a fan (30).

8. The vehicle cooling system (100) according to any one of claims 1 to 5, **characterised in that**
the power electronic device (5) comprises at least one of an inverter, an on-board charger, and a direct current-to-direct current converter.

9. The vehicle cooling system (100) according to any one of claims 1 to 5, **characterised in that**
the oil cooling circuit (20) further comprises an oil guiding mechanism for guiding oil to circulate in the oil cooling circuit (20).

10. The vehicle cooling system (100) according to claim 9, **characterised in that**
the oil guiding mechanism comprises an oil-cooled pump (21) integrated into the electric driving unit (2).

11. The vehicle cooling system (100) according to claim 9, **characterised in that**
the oil guiding mechanism comprises an oil guiding pipeline arranged in the electric driving unit (2) for receiving and conveying cooling oil thrown out by rotation of gears in the gearbox (4).

12. The vehicle cooling system (100) according to any one of claims 1 to 5, **characterised in that**
the housing of the power electronic device (5) is integrated with the housings for the electric motor (3) and the gearbox (4).

13. A vehicle cooling system (100), **characterised in that** the vehicle cooling system (100) comprises:
an oil cooling circuit (20);
an electric driving unit (2), comprising an electric motor (3), a gearbox (4), and a power electronic device (5),
wherein the housings for the electric motor (3) and the gearbox (4) are integrated, the oil cooling circuit (20) is arranged inside the housings for the electric motor (3) and the gearbox (4), and the cooling airflow (F) flows through the surfaces of the housings for the electric motor (3) and the gearbox (4), and
wherein the power electronic device (5) is arranged separately from the housings for the electric motor (3) and the gearbox (4), and an additional cooling airflow (F') flows through the surface of the housing of the power electronic device (5).

14. The vehicle cooling system (100) according to claim 13, **characterised in that**
at least a part of the additional cooling airflow (F') is generated by an additional fan (30').

15. A vehicle **characterised in that** the vehicle comprises a vehicle cooling system (100) according to any one of Claims 1 to 14.
